# EUROPEAN PATENT APPLICATION

(11) **EP 1 006 379 A2**
(43) Date of publication of application: **07.06.2000**
(21) Application number: 99203664.0
(22) Date of filing: 05.11.1999
(51) Int. Cl.: G02B 6/38, H01R 13/00

(54) **Combined electrical and optical connector**

(30) Priority: 03.12.1998 GB 9826550; 21.04.1999 GB 9909004
(71) Applicant: Delphi Technologies, Inc., Troy, MI 48007 (US)
(72) Inventor: Halbach, Paul Gerherd, 42369 Wuppertal (DE); Haack, Albrecht, 42369 Wuppertal (DE)
(74) Representative: Denton, Michael John

(57) **Abstract**

A combined electrical and optical connector (10) comprising a main housing (12) having a through bore (62) extending between a front face (64) and a rear face (66) of the main housing, a pair of additional bores (70) extending from the rear face substantially parallel with the through bore, and a pair of latch members (82) adjacent the front face and in alignment with the additional bores; a retaining member (14) having a first portion (20) positioned in and extending through the through bore of the main housing, a second portion (22) having a pair of cylindrical members (52) positioned in and extending through the additional bores of the main housing and opening through a front face (54) and a rear face (56) of the second portion, terminal bores (24) opening through a front face (26) and a rear face (28) of the first portion; electrical terminals (18) secured in the terminal bores of the first portion of the retaining member; and a pair of optical ferrules (16) retained by the latch members and secured between the latch members and the front face of the second portion of the retaining member in axial alignment with the cylindrical members. The retaining member has the dual function of housing the electrical terminals and acting as position assurance for the optical ferrules.

## Description

### Technical Field

The present invention relates to a combined electrical and optical connector.

### Background of the Invention

There is a need to provide a connector which is capable of connecting both electrical conductors and optical fibres.

### Summary of the Invention

The object of the present invention is to provide such a combined electrical and optical connector.

A combined electrical and optical connector in accordance with the present invention comprises a main housing having a through bore extending between a front face and a rear face of the main housing, a pair of additional bores extending from the rear face substantially parallel with the through bore, and a pair of latch members adjacent the front face and in alignment with the additional bores; a retaining member having a first portion positioned in and extending through the through bore of the main housing, a second portion having a pair of cylindrical members positioned in and extending through the additional bores of the main housing and opening through a front face and a rear face of the second portion, terminal bores opening through a front face and a rear face of the first portion; electrical terminals secured in the terminal bores of the first portion of the retaining member; and a pair of optical ferrules retained by the latch members and secured between the latch members and the front face of the second portion of the retaining member in axial alignment with the cylindrical members.

The present invention provides a combined electrical and optical connector in which the retaining member has the dual function of housing the electrical terminals and of acting a position assurance device for the optical ferrules.

### Brief Description of the Drawings

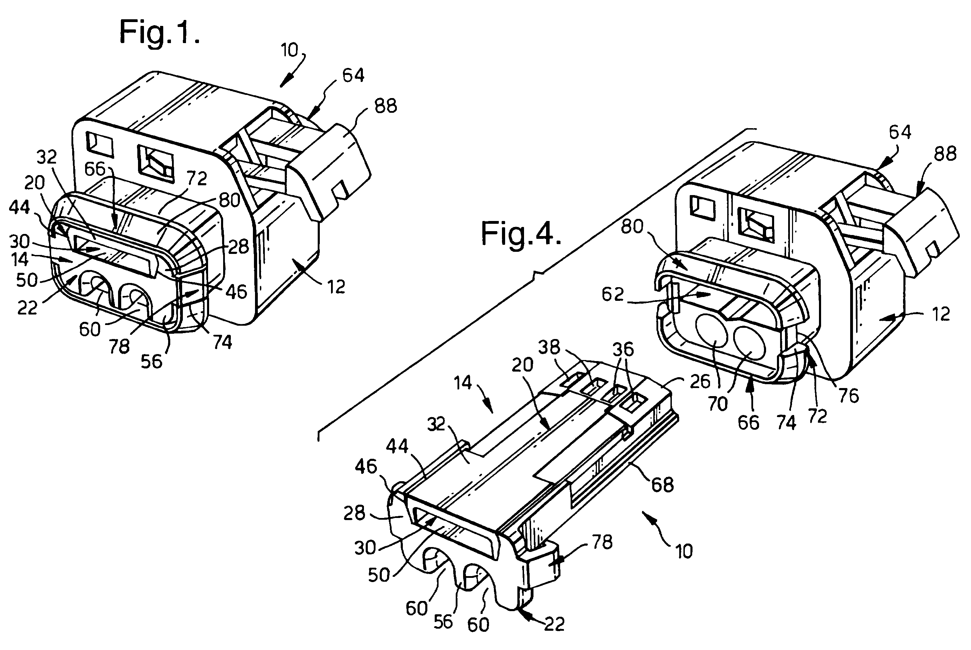

The present invention will now be described, by way of example, with reference to the accompanying drawings, in which:-
Figure 1 is a perspective view of the combined electrical and optical connector in accordance with the present invention, from the rear of the connector;

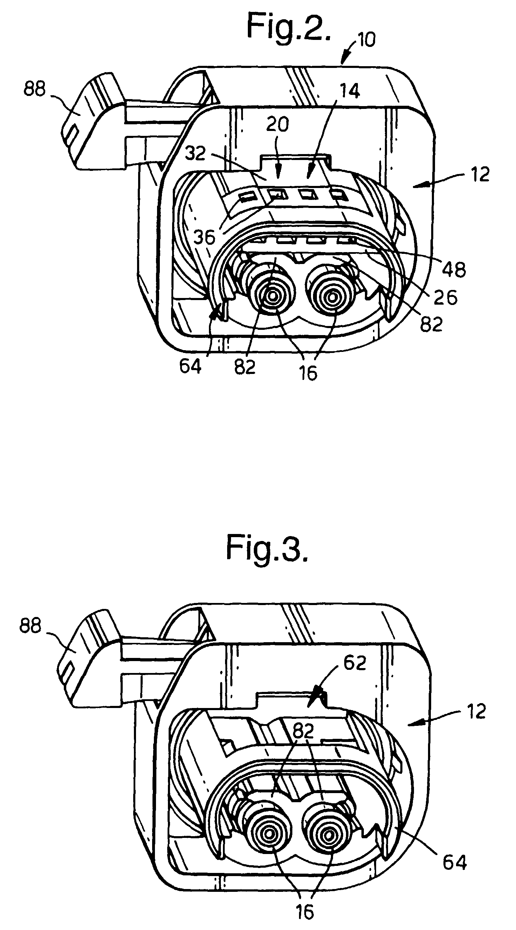

Figure 2 is a perspective view of the connector of Figure 1 from the front;
Figure 3 is a similar view to that of Figure 2 before insertion of the retaining member of the connector;

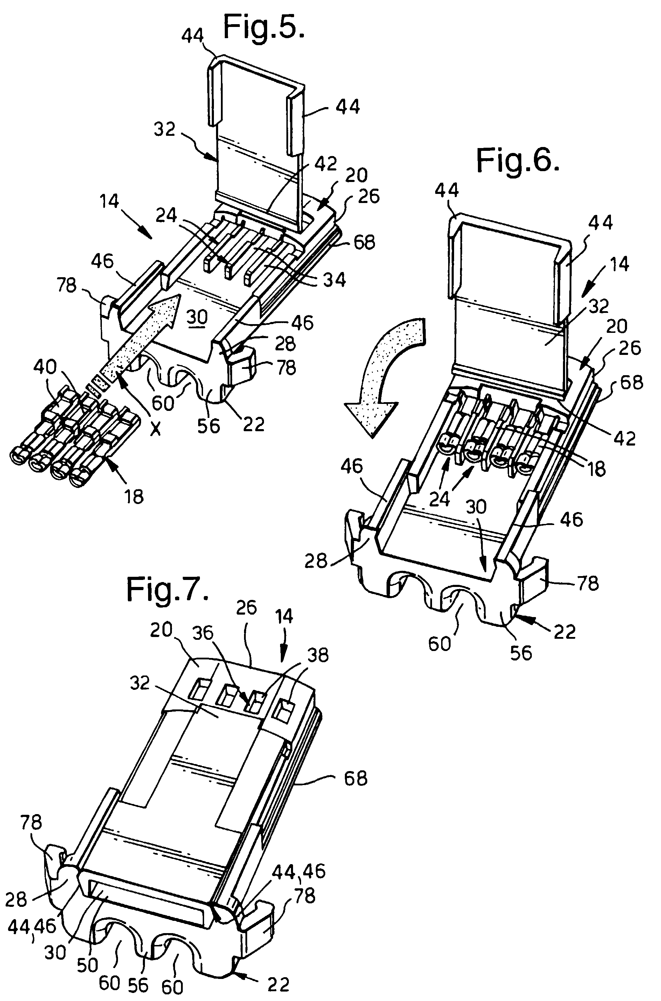

Figure 4 is a similar view to that of Figure 1 prior to final assembly of the connector;
Figures 5 to 7 are perspective views of the retaining member of Figure 4 during various stages of assembly;

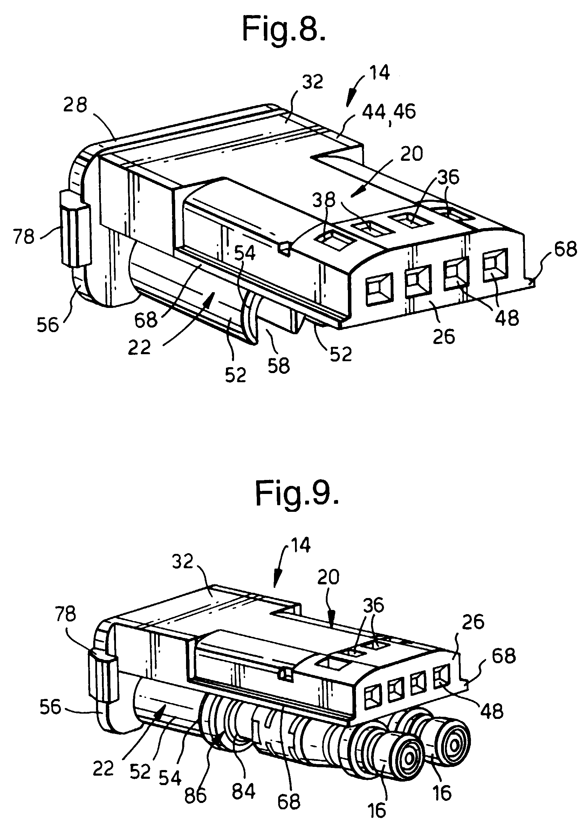

Figure 8 is a perspective view of the retaining member of Figure 4 from the front; and
Figure 9 is a perspective view of the retaining member and the optical ferrules of the connector of Figure 1.

### Description of the Preferred Embodiment

Referring to the drawings, the combined electrical and optical connector 10 comprises a main housing 12, a retaining member 14, a pair of optical ferrules 16, and a number of electrical terminals 18.

The retaining member 14 has an upper portion 20 and a lower portion 22. The electrical terminals 18 are positioned in adjacent bores 24 formed in the upper portion 20 of the retaining member 14. The terminal bores 24 extend between a front face 26 of the upper portion 20 and a rear face 28 of the upper portion. The terminal bores 24 are defined, in part, by an open sided channel 30 which is closed by a hinged flap 32, and walls 34 formed in the channel. An aperture 36 opens into each terminal bore 24 to define a latch shoulder 38. Each electrical terminal 18 has a latch tang 40 which makes a snap fit with the latch shoulder 38 when the terminal is slid in the forward direction X into position in one of the terminal bores 24. The hinged flap 32 includes a ridge 42 which extends across the terminal bores 24 on closing of the flap to define a stop member which prevents withdrawal of the terminals 18 in a rearward direction. The hinged flap 32 also includes a pair of resilient latch tabs 44 which make a snap fit with corresponding shoulders 46 on the upper portion 20 on closing of the flap. The shoulders 46 are preferably positioned adjacent the rear face 28 of the upper portion 20. Each terminal bore 24 has an opening 48 in the front face 26 of the upper portion 20 for insertion of a corresponding electrical terminal (not shown) for mating with the electrical terminal 18 in the bore. The terminal bores 24 have a common opening 50 in the rear face 28 of the upper portion 20 for passage of electrical conductors (not shown) which are connected to the electrical terminals 18.

The lower portion 22 of the retaining member 14 includes a pair of substantially cylindrical members 52 which extend between a front face 54 of the lower portion and a rear face 56 of the lower portion. The cylindrical members 52 preferably have a substantially C-shaped cross-section, are substantially parallel, and have an opening 58 in the front face 54 and an opening 60 in the rear face 56. The rear face 56 of the lower portion 22 and the rear face 28 of the upper portion 20 are preferably substantially aligned, as shown. The front face 54 of the lower portion 22 and the front face 26 of the upper portion 20 are preferably substantially parallel and spaced apart such that the upper portion has a greater axial length than the lower portion.

The main housing 12 has a through bore 62 which extends between a front face 64 of the main housing and a rear face 66 of the main housing. The through bore 62 is shaped to receive the upper portion 20 of the retaining member 14 as the retaining member is slid into the main housing in the forward direction X. To assist in the sliding insertion of the upper portion 20 of the retaining member 14 in the through bore 62, the upper portion preferably includes a pair of external ridges 68 which extend axially from adjacent the front face 26 and which make a sliding fit in corresponding grooves (not shown) in the through bore. The ridges 68 and corresponding grooves also assist in maintaining alignment of the electrical terminals 18 within the main housing 12.

The main housing 12 also includes a pair of additional bores 70 which extend from the rear face 66 in the forward direction X for receiving the cylindrical members 52 of the lower portion 22 of the retaining member 14 as the retaining member is slid into the main housing. The optical ferrules 16 are positioned inside the main housing 12 in axial alignment with the additional bores 70. Each optical ferrule 16 makes a snap fit with a substantially C-shaped latch member 82 formed in the main housing 12 adjacent the front face 64 of the main housing. The latch members 82 provide accurate positioning and alignment for the optical ferrules 16. On sliding of the retaining member 14 into the main housing 12, the front face 54 of the lower portion 22 of the retaining member acts on the rear 84 of each optical ferrule 16 to secure the ferrules in position inside the main housing, and to substantially prevent movement of the optical ferrules in a rearward direction. The cylindrical members 52 of the lower portion 22 of the retaining member 14 act as cable guides for optical fibres (not shown) connected to the optical ferrules 16. A sealing member 86 may be positioned between the rear 84 of each optical ferrule 16 and the front face 54 of the lower portion 22 of the retaining member 14.

The rear face 66 of the main housing 12 is shaped to form a shoulder 72 with a chamfered rear face 80 over which an elastomeric grommet (not shown) can make a sliding fit. The shoulder 72 extends substantially circumferentially and includes a pair of laterally opposed gaps 74 which define latch shoulders 76. Latch tabs 78 are formed on the retaining member 14 adjacent the rear faces 28,50 of the upper and lower portions 20,22. The latch tabs 78 on the retaining member 14 make a snap fit with the latch shoulders 76 on the main housing 12 to secure the retaining member to the main housing after the retaining member is slid into position. The latch tabs 78 are shaped to correspond to the shape of the shoulder 72 to substantially close the gaps 74 in the shoulder.

The main housing 12 may include a sliding lock member 88 for locking the connector 10 to a corresponding connector after mating of the two connectors.

The present invention provides a combined electrical and optical connector 10 is which the electrical terminals 18 can be pre-assembled in the retaining member 14. The retaining member 14 has the dual function of providing a housing for the electrical terminals 18, and of acting as a position assurance member for the optical ferrules 16. Such an arrangement provides easier manufacture and assembly of the connector 10.

## Claims

1. A combined electrical and optical connector comprising a main housing having a through bore extending between a front face and a rear face of the main housing, a pair of additional bores extending from the rear face substantially parallel with the through bore, and a pair of latch members adjacent the front face and in alignment with the additional bores; a retaining member having a first portion positioned in and extending through the through bore of the main housing, a second portion having a pair of cylindrical members positioned in and extending through the additional bores of the main housing and opening through a front face and a rear face of the second portion, terminal bores opening through a front face and a rear face of the first portion; electrical terminals secured in the terminal bores of the first portion of the retaining member; and a pair of optical ferrules retained by the latch members and secured between the latch members and the front face of the second portion of the retaining member in axial alignment with the cylindrical members.

2. A connector as claimed in Claim 1, wherein the front face of the main housing and the front face of the first portion of the retaining member are substantially aligned; and wherein the rear face of the main housing, the rear face of the first portion of the retaining member, and the rear face of the second portion of the retaining member are substantially aligned.

3. A connector as claimed in Claim 1 or Claim 2, wherein the retaining member makes a sliding fit in the main housing during assembly of the connector.

4. A connector as claimed in Claim 3, wherein the first portion of the retaining member has axially extending ridges which make a sliding fit in corresponding grooves in the through bore in the main housing during assembly of the connector.

5. A connector as claimed in any one of Claims 1 to 4, wherein the terminal bores in the first portion of the retaining member are defined, in part, by an open sided channel which is closed by a hinged flap, and walls formed in the channel.

6. A connector as claimed in Claim 5, wherein the hinged flap has resilient tabs which make a snap fit with corresponding shoulders on the first portion after insertion of the electrical terminals in the terminal bores; and wherein the hinged flap has an internal ridge which extends into the channel on closing the hinged flap to retain the electrical terminals.

7. A connector as claimed in any one of the preceding Claims, wherein each electrical terminal has a latch tang which makes a snap fit with a corresponding latch shoulder formed in each terminal bore.

8. A connector as claimed in any one of the preceding Claims, wherein the rear face of the main housing has a circumferentially extending shoulder for receiving an elastomeric grommet.

9. A connector as claimed in Claim 8, wherein the shoulder has laterally opposed gaps which define latch shoulders; and wherein latch tabs are formed on the retaining member which make a snap fit with the latch shoulders to secure the retaining member to the main housing.

10. A combined electrical and optical connector substantially as hereinbefore defined with reference to, and as shown in, the accompanying drawings.
